# EUROPEAN PATENT APPLICATION

(11) **EP 3 471 229 A1**
(43) Date of publication of application: **17.04.2019**
(21) Application number: 17812620.7
(22) Date of filing: 08.06.2017
(51) Int. Cl.: H02H 9/02

(54) **SWITCHING APPARATUS FOR RESIDUAL CURRENT CIRCUIT BREAKER**

(30) Priority: 12.06.2016 CN 201610407747
(71) Applicant: Seari Electric Technology Co., Ltd., Shanghai 200063 (CN); Zhejiang Chint Electrics Co., Ltd., Yueqing, Zhejiang 325603 (CN)
(72) Inventor: CHEN, Yongliang, Shanghai 200063 (CN); GE, Weijun, Shanghai 200063 (CN); XU, Lei, Shanghai 200063 (CN); FU, Hua, Shanghai 200063 (CN)
(74) Representative: Osha Liang
(86) International application number: PCT/CN2017/087566
(87) International publication number: WO 2017/215509

(57) **Abstract**

A switching apparatus for a residual current circuit breaker, comprising: an A-type residual current detection drive circuit (102), a B-type residual current detection drive circuit (104), a switching power supply (106), a trip execution circuit (108) and a drive switching circuit (110), wherein the B-type residual current detection drive circuit is powered by the switching power supply. The drive switching circuit detects a power supply voltage of the switching power supply. When the drive switching circuit detects the power supply voltage, the drive switching circuit switches on the B-type residual current detection drive circuit and the trip execution circuit, and the B-type residual current detection drive circuit drives the trip execution circuit. When the drive switching circuit does not detect a power supply voltage, the drive switching circuit switches on the A-type residual current detection drive circuit and the trip execution circuit, and the A-type residual current detection drive circuit drives the trip execution circuit. The apparatus may switch between the A-type residual current detection drive circuit and the B-type residual current detection drive circuit, according to whether or not a power supply voltage exists, and thus may avoid an occurrence of a false trip.

## Description

### BACKGROUND OF THE INVENTION

### 1. Field of the Invention

Embodiments of the present invention relate to the field of low voltage electrical appliances, and more particularly to residual current circuit breakers.

### 2. The Related Art

The residual current circuit breaker is mainly used for protecting surge currents. Clause 9.19.2 of the National Standard GB 16916.1 "Part I General Rules for Residual Current Circuit Breakers without Overcurrent Protection (RCCB) for Household and Similar Uses" and clause 9.19.2 of the National Standard GB 16917.1 "Part I General Rules for Residual Current Circuit Breaker with Overcurrent Protection (RCBO) for Household and Similar Uses" stipulate: 10 surge currents are applied to any one pole of the RCCB/RCBO, the polarity of the surge current is changed each two applications. The time interval between two consecutive applications of the surge current is about 30s. The surge current is generated by a current generator and is an 8/20us attenuation surge current. For a general type RCCB/RCBO, it is allowed to trip during the test. A residual current circuit breaker that meets the above criteria is called an A-type/AC-type residual current circuit breaker. It is characterized in that the operation process of the circuit breaker is independent of whether there exists a power supply voltage. The trip is mainly based on the current judgment.

Clause 9.19.2 of the National Standard GB 22794 "F-type and B-type Residual Current Circuit Breakers with or without Overcurrent Protection for Household and Similar Uses" stipulates: F-type and B-type RCCB/RCBO are not allowed to trip during the test. GB 22794 is a supplementary clause to GB 16916.1/GB 16917.1, in which the requirements for the function of surge current test are different. The F-type and B-type RCCB/RCBO need to satisfy both GB 16916.1/GB 16917.1 and GB 22794, that is, the F-type and B-type RCCB/RCBO does not allow to trip during the test. The surge current in GB 22794 is also generated by a current generator and is an 8/20us attenuation surge current.

The B-type residual current circuit breakers are suitable for electrical equipment that requires uninterrupted power supply, such as frequency converters, medical equipments, elevators, etc. These equipments cannot be disconnected at will due to the requirements of the application environment. The function of the B-type residual current circuit breaker covers the function of the A-type residual current circuit breaker. The A-type residual current circuit breaker and the B-type residual current circuit breaker overlap in working range and function. For example, there is an overlap on the protection of 8/20us surge current. The A-type residual current circuit breaker may cause a false trip when a surge current occurs. Such phenomena may randomly appear, and is allowed in the National Standard of the A-type residual current circuit breaker. The existing residual current circuit breakers are not clearly distinguished in the overlapping functions of the A-type and B-type. Therefore, when a surge current within the overlapping function, for example, an 8/20us surge current occurs, even if the residual current circuit breaker is currently operated under B-type mode, as the A-type mode is not completely isolated, such a surge current may cause the residual current circuit breaker to trip in error. However, the residual current circuit breaker operates under B-type mode at the time and false trip is not allowed, so that such a surge current may cause non-compliance with the National Standard. If the electrical equipment applied at the time is a frequency converter, a medical equipment, an elevator electrical equipment, it will cause huge economic losses or even life and property safety.

### SUMMARY

Embodiments of the present invention disclose a switching apparatus for a residual current circuit breaker. The apparatus comprises an A-type residual current detection drive circuit, a B-type residual current detection drive circuit, a switching power supply, a trip execution circuit and a switching drive circuit. The B-type residual current detection drive circuit is powered by the switching power supply. The drive switching circuit detects a power supply voltage of the switching power supply. When the power supply voltage is detected by the drive switching circuit, the drive switching circuit switches on the B-type residual current detection drive circuit and the trip execution circuit, and the B-type residual current detection drive circuit drives the trip execution circuit. When no power supply voltage is detected by the drive switching circuit, the drive switching circuit switches on the A-type residual current detection drive circuit and the trip execution circuit, and the A-type residual current detection drive circuit drives the trip execution circuit.

According to an embodiment, the drive switching circuit comprises a switching element and a voltage dividing circuit, the voltage dividing circuit is connected to the switching power supply, and the switching element is connected to the A-type residual current detection drive circuit. When the switching power supply outputs the power supply voltage, the voltage dividing circuit enables the switching element to switch on, and the A-type residual current detection drive circuit is short circuited and does not operate. When the switching power supply does not output the power supply voltage, the switching element switches off and the A-type residual current detection drive circuit operates.

According to an embodiment, the voltage dividing circuit comprises a first voltage dividing resistor and a second voltage dividing resistor connected in series, and the first voltage dividing resistor and the second voltage dividing resistor form a resistor-in-series voltage divider.

According to an embodiment, the switching element is an N-channel MOSFET, the gate of the N-channel MOSFET is connected between the first voltage dividing resistor and the second voltage dividing resistor, the source and the drain of the N-channel MOSFET are respectively connected to the positive and negative terminals of the A-type residual current detection drive circuit. When the switching power supply outputs the power supply voltage, the voltage dividing circuit enables the N-channel MOSFET to switch on, and the A-type residual current detection drive circuit is short circuited and does not operate; when the switching power supply does not output the power supply voltage, the voltage dividing circuit enables the N-channel MOSFET to switch off and the A-type residual current detection drive circuit operates.

According to an embodiment, the drive switching circuit comprises a selection element and a voltage dividing circuit, the voltage dividing circuit is connected to the switching power supply, and the selection element is selectively connected to the A-type residual current detection drive circuit or the B-type residual current detection drive circuit. When the switching power supply outputs the power supply voltage, the voltage dividing circuit causes the selection element to select to connect to the B-type residual current detection drive circuit and disconnect the A-type residual current detection drive circuit. When the switching power supply does not output the power supply voltage, the voltage dividing circuit causes the selection element to select to connect to the A-type residual current detection drive circuit and disconnect the B-type residual current detection drive circuit.

According to an embodiment, the voltage dividing circuit comprises an NPN transistor, a third voltage dividing resistor, a fourth voltage dividing resistor and a voltage regulator tube. The base and the emitter of the NPN transistor are connected in parallel to the fourth voltage dividing resistor. The base of the NPN transistor is connected to the voltage regulator tube and the third voltage dividing resistor in series. The NPN transistor, the third voltage dividing resistor, the fourth voltage dividing resistor and the voltage regulator tube form a resistor-in-series voltage divider.

According to an embodiment, the selection element is a relay, the relay is a double pole double throw relay, the input end of the relay is connected to the collector of the NPN transistor, the output end of the relay is connected to the trip execution circuit, the normally closed contact of the relay is connected to the A-type residual current detection drive circuit, and the normally open contact of the relay is connected to the B-type residual current detection drive circuit. When the switching power supply outputs the power supply voltage, the voltage dividing circuit enables the normally open contact to close and the normally closed contact to open, and the B-type residual current detection drive circuit is switched on to drive the trip execution circuit. When the switching power supply does not output the power supply voltage, the voltage dividing circuit enables the normally closed contact to close and the normally open contact to open, and the A-type residual current detection drive circuit is switched on to drive the trip execution circuit.

According to an embodiment, the A-type residual current detection drive circuit is not powered by the switching power supply, and the A-type residual current detection drive circuit amplifies a residual current signal by using a capacitor series circuit or a parallel resonant circuit to output a trip signal.

According to an embodiment, the B-type residual current detection drive circuit is powered by the switching power supply, the B-type residual current detection drive circuit detects an AC residual current below 1 kHz, a pulsating DC residual current or a smooth DC residual current, and the B-type residual current detection drive circuit directly outputs a trip signal.

According to an embodiment, the input of the switching power supply is a power frequency alternating current, including 230V alternating current or power frequency 400V alternating current. The output of the switching power supply is positive and negative dual voltage direct current, including +5V/-5V, +9V/-9V, or +12V/-12V dual voltage direct current.

The switching apparatus for a residual current circuit breaker according to one or more embodiments of the present invention can switch between the A-type residual current detection drive circuit and the B-type residual current detection drive circuit, according to whether or not a power supply voltage exists. Overlapping interference may be eliminated. When it is switched to the B-type residual current detection drive circuit, an occurrence of a false trip can be avoided.

### BRIEF DESCRIPTION OF THE DRAWINGS

The above and other features, natures, and advantages of the invention will be apparent by the following description of the embodiments incorporating the drawings, wherein,
FIG.1 illustrates a block diagram of the structure of a switching apparatus for a residual current circuit breaker according to an embodiment of the present invention.
FIG.2 illustrates a circuit diagram of a drive switching circuit of a switching apparatus for a residual current circuit breaker according to an embodiment of the present invention.
FIG.3 illustrates a circuit diagram of a drive switching circuit of a switching apparatus for a residual current circuit breaker according to another embodiment of the present invention.

### DETAILED DESCRIPTION OF EMBODIMENTS

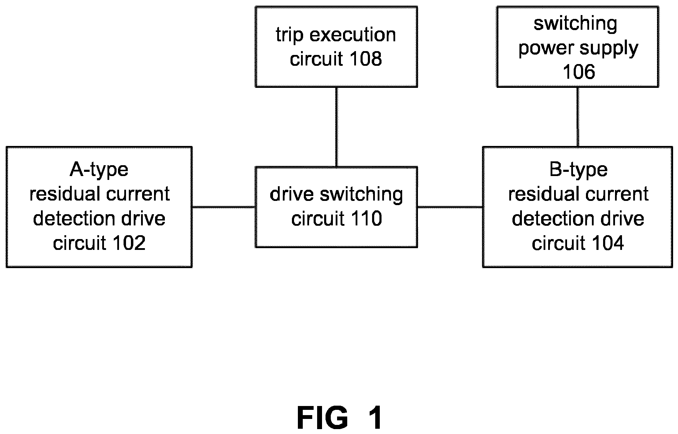

Referring to FIG. 1, FIG.1 illustrates a block diagram of the structure of a switching apparatus for a residual current circuit breaker according to an embodiment of the present invention. The switching apparatus for a residual current circuit breaker comprises an A-type residual current detection drive circuit 102, a B-type residual current detection drive circuit 104, a switching power supply 106, a trip execution circuit 108 and a drive switching circuit 110. The A-type residual current detection drive circuit 102 is independent of the power supply voltage, while the B-type residual current detection drive circuit 104 is related to the power supply voltage. The B-type residual current detection drive circuit 104 is powered by the switching power supply 106. The drive switching circuit 110 detects whether a power supply voltage of the switching power supply exists or not. When the power supply voltage is detected by the drive switching circuit 110, the drive switching circuit 110 switches on the B-type residual current detection drive circuit 104 and the trip execution circuit 108, and the B-type residual current detection drive circuit 104 drives the trip execution circuit 108. When no power supply voltage is detected by the drive switching circuit 110, the drive switching circuit 110 switches on the A-type residual current detection drive circuit 102 and the trip execution circuit 108, and the A-type residual current detection drive circuit 102 drives the trip execution circuit 108.

According to an embodiment, the A-type residual current detection drive circuit 102 is not powered by the switching power supply 106. The A-type residual current detection drive circuit 102 amplifies a residual current signal by using a capacitor series circuit or a parallel resonant circuit to output a trip signal. The residual current signal may be collected by a current transformer.

According to an embodiment, the B-type residual current detection drive circuit 104 is powered by the switching power supply 106. The B-type residual current detection drive circuit 104 can detect an AC residual current below 1 kHz, a pulsating DC residual current or a smooth DC residual current. The B-type residual current detection drive circuit 104 can also detect the AC residual current and the pulsating DC residual current in the event of a voltage loss. The B-type residual current detection drive circuit 104 directly outputs a trip signal.

According to an embodiment, the input of the switching power supply 106 for supplying power to the B-type residual current detection drive circuit is power frequency alternating current, including 230V alternating current or power frequency 400V alternating current. The output of the switching power supply 106 is positive and negative dual voltage direct current, including +5V/-5V, +9V/-9V, or +12V/-12V dual voltage direct current. Compared with the switching power supply in prior art, when receives a 400V AC input, the switching power supply 106 of the present invention may select any one phase line and a neutral line, or any two phase lines as an input under a three-phase four-wire system and operates normally. The converted positive and negative DC voltages generated thereafter are balanced by a voltage balance circuit to reduce the absolute value error between the positive and negative voltages, so that the detection accuracies of the residual current detection circuit for the positive or negative residual currents are similar.

The function of the drive switching circuit 110 is to select the A-type residual current detection drive circuit 102 or the B-type residual current detection drive circuit 104 as the drive circuit of the trip execution circuit 108 in accordance with the presence or absence of the power supply voltage. The switching mode of the driving switching circuit 110 may be electrical switching or physical switching.

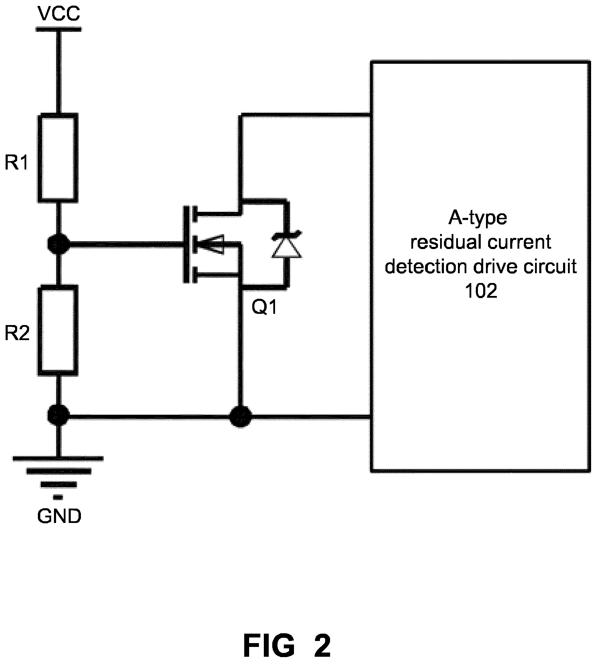

FIG.2 illustrates a circuit diagram of a drive switching circuit of a switching apparatus for a residual current circuit breaker according to an embodiment of the present invention. According to the embodiment shown in FIG. 2, the driving switching circuit 110 employs the electrical switching. The drive switching circuit comprises a switching element and a voltage dividing circuit. The voltage dividing circuit is connected to the switching power supply, and the switching element is connected to the A-type residual current detection drive circuit 102. The switching power supply outputs the power supply voltage, and the voltage dividing circuit enables the switching element to switch on. The A-type residual current detection drive circuit is short circuited and the A-type residual current detection drive circuit does not operate. When the switching power supply outputs the power supply voltage, B-type residual current detection drive circuit switches on to operate, and the trip execution circuit is driven by the B-type residual current detection drive circuit. The switching power supply does not output the power supply voltage, and the switching element switches off and the A-type residual current detection drive circuit operates. At this moment, the trip execution circuit is driven by the A-type residual current detection drive circuit. Since the operation of the B-type residual current detection drive circuit relies on the power supply voltage, the B-type residual current detection drive circuit does not operate when the switching power supply does not output the power supply voltage. According to FIG. 2, the voltage dividing circuit comprises a first voltage dividing resistor R1 and a second voltage dividing resistor R2 which are connected in series. The first voltage dividing resistor R1 and the second voltage dividing resistor R2 form a resistor-in-series voltage divider. The two ends of the resistor-in-series voltage divider are connected to VCC and GND respectively, where VCC is the positive terminal of the switching power supply, and GND is ground. The switching element Q1 is an N-channel MOSFET. The gate of the N-channel MOSFET Q1 is connected between the first voltage dividing resistor R1 and the second voltage dividing resistor R2. The source and the drain of the N-channel MOSFET Q1 are respectively connected to the positive and negative terminals of the A-type residual current detection drive circuit 102. When the switching power supply outputs the power supply voltage, a voltage is generated in the voltage dividing circuit and enables the N-channel MOSFET to switch on. The positive and negative terminals of the A-type residual current detection drive circuit are short circuited and the A-type residual current detection drive circuit does not operate. At the same time, the power supply voltage of the switching power supply enables the B-type residual current detection drive circuit to operate and the trip execution circuit is driven by the B-type residual current detection drive circuit. When the switching power supply does not output the power supply voltage, no voltage is generated in the voltage dividing circuit. The voltage dividing circuit enables the N-channel MOSFET to switch off and the A-type residual current detection drive circuit operates. Since the switching power supply does not output the power supply voltage, the B-type residual current detection drive circuit does not operate. Then the trip execution circuit is driven by the A-type residual current detection drive circuit.

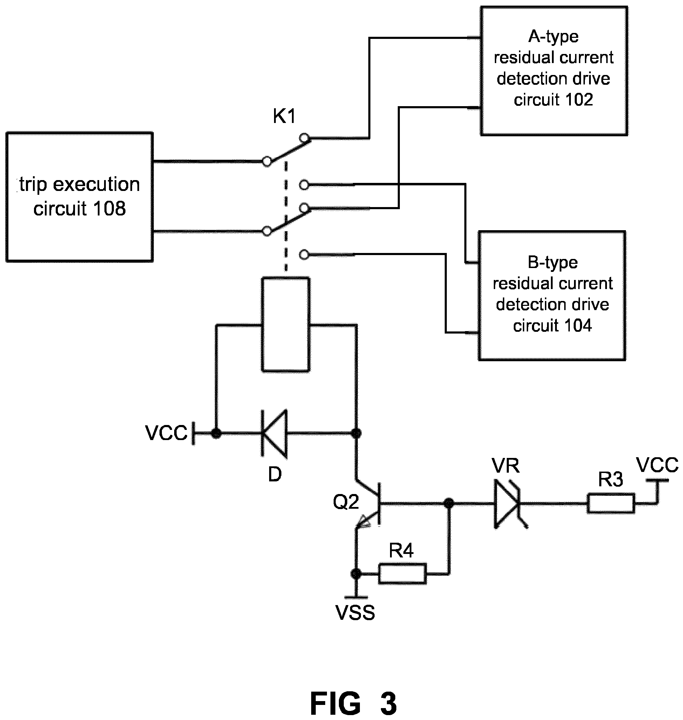

FIG.3 illustrates a circuit diagram of a drive switching circuit of a switching apparatus for a residual current circuit breaker according to another embodiment of the present invention. According to the embodiment shown in FIG. 3, the driving switching circuit 110 employs the physical switching. As shown in the figure, the drive switching circuit comprises a selection element and a voltage dividing circuit. The voltage dividing circuit is connected to the switching power supply, and the selection element is selectively connected to the A-type residual current detection drive circuit or the B-type residual current detection drive circuit. When the switching power supply outputs the power supply voltage, the voltage dividing circuit causes the selection element to select to connect to the B-type residual current detection drive circuit and disconnect to the A-type residual current detection drive circuit. The trip execution circuit is driven by the B-type residual current detection drive circuit. When the switching power supply does not output the power supply voltage, the voltage dividing circuit causes the selection element to select to connect to the A-type residual current detection drive circuit and disconnect to the B-type residual current detection drive circuit. The trip execution circuit is driven by the A-type residual current detection drive circuit. According to FIG. 3, the voltage dividing circuit comprises an NPN transistor Q2, a third voltage dividing resistor R3, a fourth voltage dividing resistor R4 and a voltage regulator tube VR. The base and the emitter of the NPN transistor Q2 are connected in parallel with the fourth voltage dividing resistor R4. The base of the NPN transistor Q2 is connected with the voltage regulator tube VR and the third voltage dividing resistor R3 in series. The NPN transistor Q2, the third voltage dividing resistor R3, the fourth voltage dividing resistor R4 and the voltage regulator tube VR form a resistor-in-series voltage divider. One end of the third voltage dividing resistor R3 is connected to VCC, which is the positive terminal of the switching power supply. The emitter of the NPN transistor Q2 is connected to VSS, which is the negative terminal of the switching power supply. The selection element is a relay K1, and the relay K1 is a double pole double throw relay. The input end of the relay K1 is connected to the collector of the NPN transistor Q2. According to the illustrated embodiment, the input of the relay K1 is coupled between the collector of NPN transistor Q2 and VCC, and a diode D is also disposed between the collector of NPN transistor Q2 and VCC. The output end of the relay K1 is connected to the trip execution circuit 108. The normally closed contact of the relay K1 is connected to A-type residual current detection drive circuit 102, and the normally open contact of the relay K1 is connected to the B-type residual current detection drive circuit 104. When the switching power supply outputs the power supply voltage, the voltage dividing circuit enables the normally open contact of the relay K1 to close and the normally closed contact of the relay K1 to open, and the B-type residual current detection drive circuit 104 is connected to the trip execution circuit 108. The B-type residual current detection drive circuit 104 switches on and operates when the power supply voltage is present, and the trip execution circuit 108 is driven by the B-type residual current detection drive circuit 104. When the switching power supply does not output the power supply voltage, the voltage dividing circuit enables the normally closed contact of the relay to close and the normally open contact of the relay to open, and the A-type residual current detection drive circuit 102 is connected to the trip execution circuit 108. Since the power supply voltage is absent, the B-type residual current detection drive circuit 104 does not operate. The operation of the A-type residual current detection drive circuit 102 does not rely on the power supply voltage, so the trip execution circuit 108 is driven by the A-type residual current detection drive circuit 102.

The switching apparatus for a residual current circuit breaker according to the present invention can switch between the A-type residual current detection drive circuit and the B-type residual current detection drive circuit, according to whether or not a power supply voltage exists. Overlapping interference may be eliminated. When it is switched to the B-type residual current detection drive circuit, an occurrence of a false trip can be avoided.

The above embodiments are provided to those skilled in the art to realize or use the invention, under the condition that various modifications or changes being made by those skilled in the art without departing the spirit and principle of the invention, the above embodiments may be modified and changed variously, therefore the protection scope of the invention is not limited by the above embodiments, rather, it should conform to the maximum scope of the innovative features mentioned in the Claims.

## Claims

1. A switching apparatus for a residual current circuit breaker, comprising: an A-type residual current detection drive circuit, a B-type residual current detection drive circuit, a switching power supply, a trip execution circuit and a drive switching circuit, wherein the B-type residual current detection drive circuit is powered by the switching power supply;
the drive switching circuit detects a power supply voltage of the switching power supply;
when the power supply voltage is detected by the drive switching circuit, the drive switching circuit switches on the B-type residual current detection drive circuit and the trip execution circuit, and the B-type residual current detection drive circuit drives the trip execution circuit;
when no power supply voltage is detected by the drive switching circuit, the drive switching circuit switches on the A-type residual current detection drive circuit and the trip execution circuit, and the A-type residual current detection drive circuit drives the trip execution circuit.

2. The switching apparatus for a residual current circuit breaker according to claim 1, wherein the drive switching circuit comprises a switching element and a voltage dividing circuit, the voltage dividing circuit is connected to the switching power supply, and the switching element is connected to the A-type residual current detection drive circuit;
when the switching power supply outputs the power supply voltage, the voltage dividing circuit enables the switching element to switch on, and the A-type residual current detection drive circuit is short circuited and does not operate;
when the switching power supply does not output the power supply voltage, the switching element switches off and the A-type residual current detection drive circuit operates.

3. The switching apparatus for a residual current circuit breaker according to claim 2, wherein
the voltage dividing circuit comprises a first voltage dividing resistor and a second voltage dividing resistor connected in series, and the first voltage dividing resistor and the second voltage dividing resistor form a resistor-in-series voltage divider.

4. The switching apparatus for a residual current circuit breaker according to claim 3, wherein
the switching element is an N-channel MOSFET, a gate of the N-channel MOSFET is connected between the first voltage dividing resistor and the second voltage dividing resistor, a source and a drain of the N-channel MOSFET are respectively connected to positive and negative terminals of the A-type residual current detection drive circuit;
when the switching power supply outputs the power supply voltage, the voltage dividing circuit enables the N-channel MOSFET to switch on, and the A-type residual current detection drive circuit is short circuited and does not operate; when the switching power supply does not output the power supply voltage, the voltage dividing circuit enables the N-channel MOSFET to switch off and the A-type residual current detection drive circuit operates.

5. The switching apparatus for a residual current circuit breaker according to claim 1, wherein the drive switching circuit comprises a selection element and a voltage dividing circuit, the voltage dividing circuit is connected to the switching power supply, and the selection element is selectively connected to the A-type residual current detection drive circuit or the B-type residual current detection drive circuit;
when the switching power supply outputs the power supply voltage, the voltage dividing circuit selects to connect to the B-type residual current detection drive circuit and disconnect the A-type residual current detection drive circuit;
when the switching power supply does not output the power supply voltage, the voltage dividing circuit selects to connect to the A-type residual current detection drive circuit and disconnect the B-type residual current detection drive circuit.

6. The switching apparatus for a residual current circuit breaker according to claim 5, wherein the voltage dividing circuit comprises an NPN transistor, a third voltage dividing resistor, a fourth voltage dividing resistor and a voltage regulator tube;
a base and an emitter of the NPN transistor are connected in parallel to the fourth voltage dividing resistor;
the base of the NPN transistor is connected to the voltage regulator tube and the third voltage dividing resistor in series;
the NPN transistor, the third voltage dividing resistor, the fourth voltage dividing resistor and the voltage regulator tube form a resistor-in-series voltage divider.

7. The switching apparatus for a residual current circuit breaker according to claim 6, wherein the selection element is a relay, the relay is a double pole double throw relay, an input end of the relay is connected to a collector of the NPN transistor, an output end of the relay is connected to the trip execution circuit, a normally closed contact of the relay is connected to the A-type residual current detection drive circuit, and a normally open contact of the relay is connected to the B-type residual current detection drive circuit;
when the switching power supply outputs the power supply voltage, the voltage dividing circuit enables the normally open contact to close and the normally closed contact to open, and the B-type residual current detection drive circuit is switched on to drive the trip execution circuit;
when the switching power supply does not output the power supply voltage, the voltage dividing circuit enables the normally closed contact to close and the normally open contact to open, and the A-type residual current detection drive circuit is switched on to drive the trip execution circuit.

8. The switching apparatus for a residual current circuit breaker according to claim 1, wherein the A-type residual current detection drive circuit is not powered by the switching power supply, and the A-type residual current detection drive circuit amplifies a residual current signal by using a capacitor series circuit or a parallel resonant circuit to output a trip signal.

9. The switching apparatus for a residual current circuit breaker according to claim 1, wherein the B-type residual current detection drive circuit is powered by the switching power supply, the B-type residual current detection drive circuit detects an AC residual current below 1 kHz, a pulsating DC residual current or a smooth DC residual current, and the B-type residual current detection drive circuit directly outputs a trip signal.

10. The switching apparatus for a residual current circuit breaker according to claim 1, wherein
an input of the switching power supply is a power frequency alternating current, including 230V alternating current or power frequency 400V alternating current;
an output of the switching power supply is positive and negative dual voltage direct current, including +5V/-5V, +9V/-9V, or +12V/-12V dual voltage direct current.
